# EUROPÄISCHE PATENTSCHRIFT

(11) **EP 4 070 429 B1**
(45) Veröffentlichungstag und Bekanntmachung des Hinweises auf die Patenterteilung: **22.04.2026**
(21) Anmeldenummer: 21701899.3
(22) Anmeldetag: 12.01.2021
(51) Int. Cl.: H02J 3/24, H02J 3/26, H02J 13/00

(54) **VERFAHREN ZUM FESTSTELLEN UNSYMMETRISCHER SCHWINGUNGEN BEIM BETRIEB EINES AN EIN HOCHSPANNUNGSNETZ ANGESCHLOSSENEN ELEKTRISCHEN GERÄTS**
METHOD FOR IDENTIFYING ASYMMETRICAL VIBRATIONS WHEN OPERATING AN ELECTRIC DEVICE CONNECTED TO A HIGH-VOLTAGE GRID
PROCÉDÉ POUR IDENTIFIER DES VIBRATIONS ASYMÉTRIQUES LORS DU FONCTIONNEMENT D'UN APPAREIL ÉLECTRIQUE CONNECTÉ À UN RÉSEAU HAUTE TENSION

(30) Priorität: 04.02.2020 DE 102020201329
(43) Veröffentlichungstag der Anmeldung: 12.10.2022
(73) Patentinhaber: Siemens Energy Global GmbH & Co. KG, 81739 München (DE)
(72) Erfinder: FLEISCHHAUER, Vitalij, 90766 Fürth (DE); HAMBERGER, Peter, 4202 Kirchschlag bei Linz (AT); HERTERICH, Holger, 90419 Nürnberg (DE); KLAMMLER, Franz, 8162 Passail (AT); KUTZNER, Rüdiger, 90513 Zirndorf (DE); MAYER, Harald, 90552 Röthenbach an der Pegnitz (DE); ROLAND, Christian, 4209 Schweinbach (AT); WEBER, Marc, 90475 Nürnberg (DE)
(86) Internationale Anmeldenummer: PCT/EP2021/050434
(87) Internationale Veröffentlichungsnummer: WO 2021/156022

(56) Entgegenhaltungen:
- EP-A2- 3 591 790
- WO-A1-2017/194349
- WO-A1-2019/166396
- WO-A1-2019/201451
- DE-A1- 102017 217 530
- DE-U1- 202018 004 493
- KR-A- 20170 053 304
- US-A1- 2017 227 592
- ADNAN SECIC ET AL: "Vibro-Acoustic Methods in the Condition Assessment of Power Transformers: A Survey", IEEE ACCESS, vol. 7, 1 January 2019 (2019-01-01), pages 83915 - 83931, XP055733464, DOI: 10.1109/ACCESS.2019.2923809

## Beschreibung

Die Erfindung betrifft ein Verfahren zum Feststellen unsymmetrischer Schwingungen beim Betrieb eines elektrischen Geräts, das an ein Hochspannungsnetz angeschlossen ist.

Bei elektrischen Transformatoren, wie sie in Energie-Übertragungs- und Verteilungsnetzen eingesetzt werden, kann es zu einer unerwünschten Einspeisung eines Gleichstroms beispielsweise in die Wicklungen kommen. Auch leistungselektronische Baukomponenten im Netz, beispielsweise die Ansteuerung elektrischer Antriebe, Umrichter für Flexible AC Transmission Systeme oder die Hochspannungsgleichstromübertragung können für Gleichströme im elektrischen Gerät sorgen. Eine andere Ursache für Gleichstöme können so genannte "Geomagnetically Induced Currents" (im Folgenden auch kurz als GIC bezeichnet) sein.

Ein Gleichstromanteil hat im Kern des Transformators einen magnetischen Gleichfluss-Anteil zur Folge, der sich dem Wechselfluss überlagert. Es kommt zu einer unsymmetrischen Aussteuerung des magnetischen Werkstoffs im Kern was eine Reihe von Nachteilen mit sich bringt. Bereits ein Gleichstrom von einigen Milliampere führt zu einer Sättigung des Kerns mit magnetischem Fluss. Damit verbunden ist eine signifikante Erhöhung der Verluste im Kern (z.B.: 20-30%). Erwärmungsprobleme können insbesondere bei großem GIC auftreten. Es kommt ferner bei Betrieb zu einer erhöhten Geräuschemission, die insbesondere dann als besonders störend empfunden wird, wenn der Transformator in der Nähe eines Wohnbereichs installiert ist.

Zur Gleichstrom-Kompensation bzw. Verringerung von Betriebsgeräuschen eines Transformators als elektrisches Gerät sind verschiedene aktiv und passiv wirkende Einrichtungen bekannt. Bevor kostenintensive Maßnahmen zur Gleichstromkompensation ergriffen werden, sollte jedoch sicher sein, ob ein solcher Gleichstromanteil überhaupt vorliegt. Es ist bekannt, dass beim Betrieb eines beispielsweise als Transformator ausgeführten elektrischen Geräts Gleichstromanteile, die in dem Transformator fließen, zu unsymmetrischen Schwindungen des Transformators führen.

DE 10 2017 217 530 A1 betrifft ein elektrisches Gerät zum Anschluss an ein Hochspannungsnetz mit einem fluiddichten Tank, der mit einem Isolierfluid befüllt und in dem ein abschnittsweise von einer Wicklung umschlossener Kern angeordnet ist, einer Kühleinheit, die mit dem Tank verbunden ist, und einer Pumpe zum Umwälzen des Isolierfluids des Tanks über die Kühleinheit.

WO 2019 / 166 396 A1 betrifft audio- und vibrationsbasierte Systeme und Verfahren zur Zustandsüberwachung von Stromverteilungsanlagen. Das System besteht aus einem IAA-Gerät und einer Sensoreinheit. Die IAA-Vorrichtung mit computerausführbaren Befehlen, wie z. B. einem Audiodatenverarbeitungsalgorithmus, ist so konfiguriert, dass sie drohende Anomalien im Zusammenhang mit einer oder mehreren Stromverteilungsanlagen erkennt und vorhersagt.

US 2017 / 227 592 A1 betrifft ein System zur Online-Durchführungsüberwachung und zur Überwachung des geomagnetisch induzierten Stroms, das einen Hall-Effekt-Stromwandler verwendet und erhält die Oberwellenkomponente der Signale durch die Messung des Durchführungsprüfabgriffstroms, was eine zuverlässigere Messmethode darstellt, da die Durchführungen einen kapazitiven Spannungsteiler bilden, der nicht der Sättigung unterliegt, was ein Nachteil der Verwendung von Stromwandlern zur Gewinnung der Signale ist. Das System kombiniert die bestehenden Oberschwingungsanalysefunktionen des Durchführungsüberwachungsmesssystems mit dem gemessenen Neutralgleichstrom, um ein wirtschaftliches und effizientes System zu schaffen, das sowohl den Durchführungszustand als auch die GIC-Bedingungen mit einem gemeinsamen Überwachungsmodul überwacht.

KR 2017 0053304 A betrifft einen akustischen Spektraldetektor zum Erkennen einer Transformatorabnormalität. Dieser umfasst eine Spektrums-Klassifizierungseinheit zum Empfangen eines im Transformator erzeugten Schallerfassungssignals und zum Analysieren eines Spektrums des Erfassungssignals, um Spektrums-Klassifizierungsinformationen zu erzeugen. Ferner eine Spektrumsignal-Akkumulations-Speichereinheit zum Akkumulieren und Speichern der Spektrumsignale, und eine Spektrumspegel-Vergleichseinheit zum Vergleichen des Spektrumsignals der voreingestellten Zeit und des kürzlich gespeicherten Spektrumsignals unter den in der Spektrumsignal-Akkumulations-Speichereinheit gespeicherten Spektrumsignalen, um Vergleichsinformationen zu erzeugen.

EP 3 591 790 A2 betrifft ein Verfahren zur Charakterisierung von Energiequalitätsereignissen in einem elektrischen System umfassend die Ableitung elektrischer Messdaten für mindestens einen ersten virtuellen Zähler in einem elektrischen System aus (a) elektrischen Messdaten von oder abgeleitet aus energiebezogenen Signalen, die von mindestens einer ersten IED in dem elektrischen System erfasst werden, und (b) elektrischen Messdaten von oder abgeleitet aus energiebezogenen Signalen, die von mindestens einer zweiten IED in dem elektrischen System erfasst werden.

WO 2019 / 201 451 A1 betrifft ein elektrisches Gerät zum Anschluss an ein Hochspannungsnetz mit einem magnetisierbaren Kern, wenigstens einer Wicklung, die zum Erzeugen eines Magnetfeldes in dem Kern eingerichtet ist, und einer Gruppe von Messsensoren, die ausgangsseitig Messsignale bereitstellen.

DE 20 2018 004 493 U1 betrifft ein elektrisches Gerät zum Anschluss an ein Hochspannungsnetz mit- einem magnetisierbaren Kern,- wenigstens einer Wicklung, die zum Erzeugen eines Magnetfeldes in dem Kern eingerichtet ist, und- einer Gruppe von Messsensoren, die ausgangsseitig Messsignale bereitstellen. Es ist wenigstens eine Kommunikationseinheit mit einem Gehäuse vorgesehen, in dem ein GSM-Modul sowie mehrere analoge und mehrere digitale Messeingänge angeordnet sind, wobei mehrere Messsensoren mit einer Kommunikationseinheit verbunden sind und die jeweilige Kommunikationseinheit zum Verarbeiten der aus den verschiedenen Messsignalen gewonnenen Messdaten eingerichtet ist.

Adnan Secic ET AL: "Vibro-Acoustic Methods in the Condition Assessment of Power Transformers: A Survey", IEEE Access, Bd. 7, 1. Januar 2019, Seiten 83915-83931 betrifft die Kategorisierung und Überprüfung des Stand der Techniks bei vibroakustischen Diagnosemethoden für Leistungstransformatoren zu. Die kontinuierliche Zustandsüberwachung wird vorgestellt und ein Überblick über die Ursachen von Transformatorschwingungen sowie die Erfassung und Vorverarbeitung von Diagnosedaten gegeben. Es werden die Merkmalsextraktion im Zeit-, Frequenz- und Zeit-Frequenz-Bereich als auch die mathematische Modellierung und Systemidentifikation dynamischer Systeme vorgestellt.

WO 2017 / 194 349 A1 betrifft ein Verfahren zur Überwachung der Inbetriebnahme und der Plausibilität von Daten eines Leistungsmesssensors in einem Verteilernetz mit einer Rechnereinheit, die mit einem Topologiemodell des überwachten Verteilernetzes versehen ist, die mit einer Kommunikationseinrichtung zur drahtlosen Kommunikation mit mobilen Endgeräten versehen ist, und die neu in das Verteilernetz aufgenommene Sensoren automatisch erkennt und mit dem neuen Sensor in einen Datenaustausch tritt. Die Rechnereinheit führt nach dem Erkennen eines neuen Leistungsmesssensors im Verteilernetz über die Rechnereinheit eine Plausibilitätsprüfung der Messdaten des neuen Leistungsmesssensors anhand von Messdaten bereits vorhandener Leistungsmesssensoren im Verteilernetz durch und dass bei nicht plausiblen Messwerten des neuen Leistungsmesssensors über die Rechnereinheit eine Meldung zur manuellen Änderung des physikalischen Sensoranschlusses am Verteilernetz ausgegeben wird, oder eine Korrektur der Daten des neuen Leistungsmesssensors oder eine Zuordnung des neuen Leistungsmesssensors zu einem anderen Verteilernetz erfolgt.

Aufgabe der Erfindung ist es daher, ein Verfahren der eingangs genannten Art zu schaffen, mit dem einfach, schnell und sicher festgestellt werden kann, ob beim Betrieb in einem Hochspannung führenden elektrischen Versorgungsnetz das elektrische Gerät unsymmetrisch schwingt.

Die Erfindung löst diese Aufgabe durch die Merkmale des Patentanspruchs 1.

Erfindungsgemäß kann schnell, einfach und mit hoher Sicherheit festgestellt werden, ob in einem elektrischen Gerät, wie beispielweise einem Leistungstransformator beim Betrieb unsymmetrische Schwingungen auftreten. Bisher erfolgte der Nachweis von unsymmetrischen Schwingungen durch aufwändige elektrische Messungen oder akustische Messreihen am elektrischen Gerät. Die Analyse der Messdaten musste durch Experten erfolgen. Mit anderen Worten hatten die vorbekannten Verfahren hohe Kosten im Gefolge. Das erfindungsgemäße Verfahren ist hingegen nicht nur kostengünstig, sondern kann darüber hinaus einfach in Gang gesetzt werden, ohne dass ein besonderes Fachwissen erforderlich ist. Es kann daher von beliebigen Nutzern, beispielsweise den Betreibern des elektrischen Geräts, durchgeführt werden. Werden unsymmetrische Schwingungen nachgewiesen, können geeignete Maßnahmen zu deren Unterdrückung ergriffen werden.

Beim Betrieb des elektrischen Geräts ist dieses im Rahmen der Erfindung an ein Hochspannungsnetz angeschlossen. Das elektrische Gerät ist daher für Hochspannungen zwischen 1 KV und 1300 kV ausgelegt und beispielweise ein Transformator, insbesondere Leistungstransformator, oder eine Drossel. Ein solcher Transformator oder eine solche Drossel verfügt bevorzugt über einen mit einem Isolierfluid befüllten Tank. In dem Tank ist ein Aktivteil angeordnet, das einen magnetisierbaren Kerne und wenigsten eine Wicklung aufweist. Wenigstens eine Wicklung ist beim Betrieb mit dem Wechselspannung führenden Hochspannungsnetz verbunden. Als Isolierfluid kommt beispielsweise eine Esterflüssigkeit oder ein mineralisches Öl in Betracht. Es dient neben der elektrischen Isolation des Aktivteils gegenüber dem auf Erdpotential liegenden Tank auch zur Kühlung der Bauteile.

Abweichend davon ist der elektrischen Gerät beispielsweise ein Gießharz- oder Trockentransformator. Die Wicklungen eines Trockentransfomators sind in einem Harzblock oder Harzfolie angeordnet. Das Harz dient als fester Isolierstoff. Ein mit Isolierfluid befüllter Tank ist bei einen Trockentransformator nicht vorgesehen.

Mathematisch kann das erfindungsgemäße Verfahren zum Nachweis unsymmetrischer Schwingungen, wie folgt beschrieben werden. S_{xN} sei der Signalwert des Frequenzspektrums in willkürlichen Einheiten, wobei x für gerade (x=g), ungerade (x=u) oder rauschen (x=n) steht. N ist die Ordnungszahlt des Signals, wobei N=1 der Grundschwingung entspricht und N=2,3,4, ... , Nmax den harmonischen Oberschwingungen. Gerade Frequenzen f_{gN} ergeben sich bei einer Speisespannung von 50 Hz gemäß f_{gN} = 50*2*N. Ungerade Frequenzen ergeben sich nach f_{uN} = 50*(2*N + 1). Ein Gleichstromanteil im elektrischen Gerät verursacht einen zusätzlichen ungeraden Anteil am Gesamtspektrum. Setzt man nun die Summe aller ungeraden Anteile am Gesamtspektrum ins Verhältnis R zu den geraden Anteilen am Gesamtspektrum und überschreitet dieses Verhältnis R eine zuvor festgelegten Schwellenwert, kann auf das Vorliegen unsymmetrischer Schwingungen geschlossen werden. Die Größe von R zeigt die Auswirkung der unsymmetrischen Schwingungen auf den Kern. Unsymmetrische Schwingungen können auf einen Gleichstromanteil hinweisen, der über das elektrische Gerät fließt.

Die Kommunikationseinheit weist im Rahmen der Erfindung beispielsweise wenigstens einen analogen und wenigstens einen digitalen Eingang auf. Somit können mehrere Sensoren mit einer Kommunikationseinheit verbunden werden. Nicht alle Sensoren müssen akustische Sensoren sein. Die Kommunikationseinheit kann auch mit Strom-, Spannungs-, Temperatur- oder Druck-Sensoren verbunden sein. Die Kommunikationseinheit verfügt beispielsweise über einen Haupt- und einen Nebenprozessor sowie über eine Speichereinheit, in der vorverarbeitete Messwerte oder daraus abgeleitete Werte abgelegt und bearbeitet werden können, z.B. durch Mittelwertbildung. Die Messwerte verschiedener Sensoren können daher gemeinsam von einer Kommunikationseinheit über eine Fernbereichskommunikationsverbindung an die Datenverarbeitungs-Cloud gesendet werden.

Der Nutzer des erfindungsgemäßen Verfahrens ist beispielsweise ein Betreiber eines Energieversorgungsnetzes, der für eine Anzahl von Transformatoren, Leistungsschaltern, Kondensatorbatterien, Funkenstrecken oder dergleichen verantwortlich ist.

Als elektrischer Schwingungsaufnehmer oder mit andern Worten Sensor kommt im Rahmen der Erfindung jeder Sensor in Betracht, der Vibrationen oder Schwingungen des elektrischen Geräts eingangsseitig erfassen und in Abhängigkeit der Amplitude Vibrationen ausgangsseitig elektrische Signale bereitstellen kann. Diese elektrischen Signale werden hier als Messwerte bezeichnet. Die elektrischen Signale können analoge elektrische Signale, beispielsweise ein elektrischer Strom oder eine Spannung sein, deren Höhe der Amplitude der empfangenen Schallwelle entspricht. Die Messwerte können jedoch im Rahmen der Erfindung auch digitale Werte sein, die z.B. durch Abtasten der analogen Signale unter Gewinnung von Abtastwerten und digitalisieren der Abtastwerte erzeugt wurden.

Jeder Schwingungsaufnehmer ist im Rahmen der Erfindung über eine Nahbereichskommunikations-Verbindung mit der Kommunikationseinheit verbunden. Die Nahbereichskommunikations-Verbindung kann beispielsweise ein einfaches Kabel sein. Abweichend davon ist die Nahbereichskommunikations-Verbindung beispielsweise eine ZigBee-, eine Bluetooth-, eine Wireless-, Ambus- oder eine WiFi-Kommunikationsverbindung. Die Nahbereichs-Kommunikationsverbindung erstreckt sich maximal über 100 Meter.

Die Verbindung zwischen Kommunikationseinheit und Datenverarbeitungs-Cloud erfolgt im Rahmen der Erfindung über eine Fernbereichs-Kommunikationsverbindung. Um diese herzustellen, verfügt die Kommunikationseinheit über eine Fernbereichskommunikationseinrichtung, wie beispielsweise ein Mobilfunkmodul nach GPRS- oder UMTS-Standard auf. Mit diesem wird eine Fernbereichskommunikationsverbindung, vorzugsweise eine IPbasierte Datenverbindung, mit der Datenverarbeitungs-Cloud aufgebaut. Dabei kann beispielsweise ein Anbieter eines Mobilfunkdienstes oder ein Telekommunikationsanbieter zwischengeschaltet sein und die Fernbereichskommunikationsverbindung kann zumindest teilweise über ein Kommunikationsnetz dieses Anbieters und/oder zumindest teilweise über das Internet hergestellt werden. Zur Herstellung der Verbindung fällt dann ein nur sehr geringer Konfigurations- beziehungsweise Parametrieraufwand an. Außer der Konfigurierung der Fernbereichs-Kommunikationseinrichtung mit den für den Aufbau der Fernbereichskommunikations-Verbindung notwendigen Informationen, z.B. den Einbau einer SIM-Karte eines Telekommunikationsanbieters, muss für die einzelne Kommunikationseinheit kein weiterer Aufwand betrieben werden.

Unter einer Cloud oder Datenverarbeitungs-Cloud soll hier eine Anordnung mit einer oder mehreren Datenspeichereinrichtungen und einer oder mehreren Datenverarbeitungseinrichtung verstanden werden, die durch geeignete Programmierung zur Durchführung beliebiger Datenverarbeitungsprozesse ausgebildet werden kann. Die Datenverarbeitungseinrichtungen stellen hierbei in der Regel universelle Datenverarbeitungseinrichtung, wie beispielsweise Server, dar, die hinsichtlich ihrer Konstruktion und ihrer Programmierung zunächst keinerlei spezifische Auslegung aufweisen. Erst durch eine vorgenommene Programmierung lässt sich die universelle Datenverarbeitungseinrichtung zur Ausführung spezifischer Funktionen ertüchtigen.

Insofern die Cloud mehrere einzelne Komponenten aufweist, sind diese auf geeignete Weise zur Datenkommunikation miteinander verbunden, beispielsweise durch ein Kommunikationsnetzwerk. Einer Datenverarbeitungs-Cloud können beliebige Daten zur Datenspeicherung und/oder Verarbeitung zugeführt werden. Die Datenverarbeitungs-Cloud selbst stellt die gespeicherten Daten und/oder die Ereignisse der durchgeführten Datenverarbeitung wiederum anderen Geräten, beispielsweise mit einer Datenverarbeitungs-Cloud verbundenen Computerarbeitsstationen, Laptops, Smartphones zur Verfügung. Eine Datenverarbeitungs-Cloud kann beispielsweise durch ein Rechenzentrum oder auch mehrere vernetzte Rechenzentren bereitgestellt werden. Üblicherweise ist eine Datenverarbeitungs-Cloud räumlich entfernt von den Hochspannungsgeräten ausgebildet.

Das elektrische Gerät ist im Rahmen der Erfindung ist für einen Betrieb im Spannungs- bzw. Hochspannungsnetz ausgelegt, d.h. für eine Betriebsspannung zwischen 1 kV und 1200 kV, insbesondere 50 kV und 800 kV. Das Hochspannungsnetz ist bevorzugt ein Wechselspannungsnetz.

Erfindungsgemäß ist ein elektrisches Gerät, beispielsweise ein Transformator, insbesondere Leistungstransformator, eine Drossel oder dergleichen.

Bei einer Variante des erfindungsgemäßen Verfahrens ist die Kommunikationseinheit ein Mobiltelefon. Als Mobiltelefon eignet sich ein so genanntes "Smart Phone" besonders gut. Unter einem Smart Phone ist hier leistungsfähiges Mobiltelefon zu verstehen. Solche Mobiltelefone sind üblicherweise bereits mit einem Mikrophon als akustischen Sensor ausgerüstet. Ferner verfügt ein solches Mobiltelefon über einen Speicher sowie eine programmierbare Einheit, beispielsweise über wenigstens einen Prozessor. Das gesamte Mobiltelefon dient jedoch hier nicht zum Durchführen des erfindungsgemäßen Verfahrens.

Es dient zum einen zur Verbindung der Datenverarbeitung-Cloud. Das Mobiltelefon erfasst mittels seines Mikrophons die Geräusche eines Transformators und legt die dabei gewonnen Messwerte auf seiner Speichereinheit ab. In vorbestimmten Zeitintervallen erfolgt eine Verbindung mit der Datenverarbeitungs-Cloud, an welche die Messwerte einzeln oder gemittelt gesendet werden.

Bei einer besonders bevorzugten Ausgestaltung ist die Kommunikationseinheit eine Kommunikationsbox. Die Kommunikationsbox ist beispielsweise am elektrischen Gerät befestigt. Insbesondere ist die Kommunikationsbox an einer Außenwand des elektrischen Geräts befestigt. Die Kommunikationsbox ist so von außen zugänglich.

Bei einer Variante des Verfahrens werden die Messwerte mehrerer Schwingungsaufnehmer gemeinsam an die Datenverarbeitungs-Cloud übertragen. Zuvor können die Messwerte jedoch vorverarbeitet, also beispielsweis über einen Messzeitraum hinweg gemittelt werden.

Vorteilhafterweise verfügt das Mobiltelefon also eine andere Kommunikationseinheit über eine Speichereinheit, auf der die Messwerte oder die von den Messwerten abgeleiteten Werte gespeichert werden. Die Speichereinheit vereinfacht die möglicherweise gewünschte Vorverarbeitung der Messwerte.

Bevorzugt werden die Vibrationen an verschiedenen Orten am elektrischen Gerät erfasst. Hierzu nimmt der Nutzer die Vibrationen des elektrischen Geräts an unterschiedlichen Stellen am elektrischen Gerät auf. Anschließend wird für alle Frequenzanteile aus den jeweils gewonnen Spektren ein Mittelwert über die durchgeführten Messungen gebildet. Bevorzugt führt eine Software den Nutzer hierbei interaktiv, so dass die richtigen Schritte zur richtigen Zeit durchgeführt werden können.

Vorteilhafterweise werden die Vibrationen über eine vorgegebene Zeitdauer hinweg erfasst. Die Zeitdauer liegt bevorzugt im Bereich zwischen 10 und 60 Sekunden für jede Messung.

Bei einer vorteilhaften Variante der Erfindung wird mittels einer Antenne zur Positionsbestimmung, die in der Kommunikationseinheit angeordnet ist, die geographische Lage der jeweiligen Kommunikationseinheit und des damit verbundenen elektrischen Geräts ermittelt und an die Datenverarbeitungs-Cloud übertragen.

Bei einer weiteren vorteilhaften Ausgestaltung der Erfindung werden die akustischen Signale an Stellen (A, B, C, D) am elektrischen Gerät erfasst. Dazu sind die Schwingungsaufnehmer fest im elektrischen Gerät verbaut.

Weitere zweckmäßige Ausgestaltungen und Vorteile der Erfindung sind Gegenstand der nachfolgenden Beschreibung von Ausführungsbeispielen der Erfindung unter Bezugauf die Figur der Zeichnung, wobei gleiche Bezugszeichen auf gleichwirkende Bauteile verweisen und wobei
- Figur 1: ein Ausführungsbeispiel des erfindungsgemäßen Verfahrens und
- Figur 2: eine weiteres Ausführungsbeispiel der Erfindung schematisch verdeutlichen.

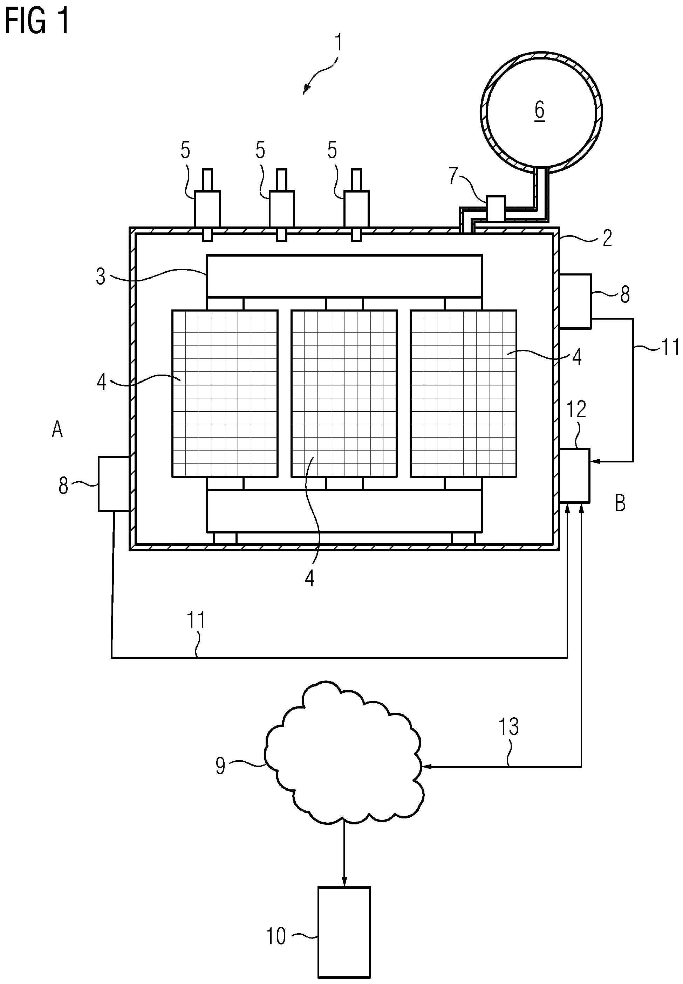

Figur 1 zeigt ein Ausführungsbeispiel des erfindungsgemäßen Verfahrens, bei dem ein Transformator 1 als elektrisches Gerät schematisch verdeutlicht ist. Der Transformator 1 verfügt über einen Tank 2, der mit einem Isolierfluid wie einer Esterflüssigkeit oder einem mineralischen Öl befüllt ist. In dem Tank 2 ist ein magnetisierbarer Kern 3 angeordnet, der einen geschlossenen Magnetkreis ausbildet. Die Schenkel des Kerns 3 sind jeweils von zwei konzentrisch zueinander angeordneten Wicklungen umschlossen, von denen nur die äußere Oberspannungswicklung 4 erkennbar ist. Die Wicklungen sind jeweils über Durchführungen 5 mit den Phasen eines Wechselspannung führenden Hochspannungsnetzes verbunden.

Ein Ausdehnungsgefäß 6 dient zum Ausgleich temperaturbedingter Volumenschwankungen des Isolierfluids im Tank 2 des Transformators 1. In der Verbindungsleitung zwischen Tank 2 und Ausdehnungsgefäß 6 ist ein Buchholzrelais 7 erkennbar.

Figur 1 zeigt ferner einen nur schematisch dargestellten Schwingungsaufnehmer 2, der an zwei verschiedenen Orten A und B die Vibrationen des Transformators 1 erfasst. Der Schwingungsaufnehmer 8 ist über eine Bluetooth-Verbindung 11 als Nahbereichs-Kommunikationsverbindung mit einer Kommunikationseinheit 12, hier einer Kommunikationsbox, verbunden. Die Kommunikationsbox 12 ist außen an der Wand des Tanks 2 festmontiert. Sie verfügt über eine Speichereinheit, auf der die von dem Schwingungsaufnehmer 8 gelieferten Messwerte ortsaufgelöst gespeichert werden. Die Kommunikationsbox 12 verbindet sich alle 2 Minuten über eine Fernbereichs-Kommunikationsverbindung 13 mit einer Datenverarbeitungs-Cloud 9 und schickt die auf ihrer Festplatte abgelegten Messwerte über die Fernbereichs-Kommunikationsverbindung 13 an eine Datenverarbeitungs-Cloud 9. Diese führt das weiter oben beschriebene Analyseverfahren durch, um unsymmetrische Schwingungen des elektrischen Geräts 1 aufzuspüren.

Die Datenverarbeitungs-Cloud 9 verfügt über eine Software, die eine Fouriertransformation der übermittelten Messwerte durchführt. Es folgt die weiter oben bereits beschriebe Bildung des Verhältnisses R. Aus der Größe von R leitet das erfindungsgemäße Verfahren ab, ob und ggf. in welchem Ausmaß unsymmetrische Schwingungen vorliegen und ggf. in welcher Größenordnung der Transformator mit einem Gleichstromanteil belastet wird. Der Nutzer hat mit dem Ergebnis des Verfahrens darüber Gewissheit über den Gleichstromanteil und kann nun angemessene Gegenmaßnahmen einleiten, um den möglicherweise festgestellten Gleichstromanteil zu unterdrücken.

Auf die Datenverarbeitungs-Cloud kann mit einem Laptop oder Rechner 10 zugegriffen werden, um das Ergebnis der Analyse zu erhalten.

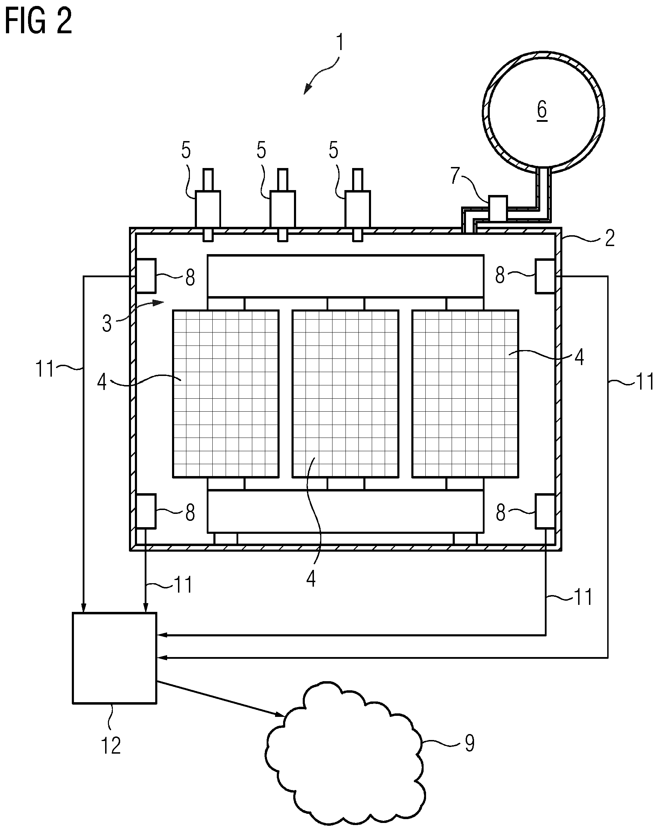

Figur 2 zeigt ein weiteres Ausführungsbeispiel zur Durchführung des erfindungsgemäßen Verfahrens, es ist wieder ein Transformator 1 als elektrisches Gerät erkennbar, der dem in Figur 1 gezeigten Transformator im Wesentlichen entspricht. Im Gegensatz, zu dem in Figur 1 gezeigten Transformator verfügt der Transformator 1 gemäß Figur 2 jedoch über vier Schwingungsaufnehmer 8, die innerhalb des Tanks 2 angeordnet sind. Jeder Schwingungsaufnehmer 8 ist über eine Nahbereichs-Kommunikationsverbindung 11, die wieder als Bluetooth-Verbindung ausgebildet ist, mit einer als Kommunikationsbox ausgeführten Kommunikationseinheit 12 verbunden, die in dem gezeigten Ausführungsbeispiel nicht fest am Transformator 1 befestigt ist. Vielmehr befindet sich die Kommunikationseinheit 12 in einem nahegelegenen figürlich nicht dargestellten Gehäuse, das in etwa 20 m entfernt vom Transformator 1 aufgestellt ist.

Die Kommunikationseinheit 12 verfügt über vier Eingänge, so dass alle vier Sensoren 8 gleichzeitig mit der Kommunikationseinheit 12 verbunden sind. Die beim Betrieb des Transformators 1 erzeugten Vibrationen werden von den Sensoren 8erfasst, die in Abhängigkeit der Amplitude der Vibrationen oder Schwingungen ein analoges elektrisches Signal, hier einen Strom, erzeugen. Die analogen Signale werden abgetastet und die daraus erhaltenen Abtastwerte digitalisiert. Die digitalisierten Werte sind hier als Messwerte bezeichnet.

Die besagten Messwerte werden über die Nahbereichs-Kommunikationsverbindung 11 auf die Kommunikationseinheit 12 übertragen. Diese verfügt über eine figürlich nicht gezeigte Speichereinheit, auf der die Messwerte abgelegt werden.

Bei einer Variante des erfindungsgemäßen Verfahrens werden die Messwerte vorverarbeitet, d. h. beispielsweise die im 2 Sekunden-Takt übertragenen Messwerte werden über einen Zeitraum von 2 min hinweg gemittelt und die gemittelten Werte auf der Speichereinheit abgelegt. Alle 2 min stellt die Kommunikationseinheit 12 eine Verbindung mit der Datenverarbeitungs-Cloud 9 über eine Fernbereichs-Kommunikationsverbindung 13 her. Die Messwerte bzw. die gemittelten Messwerte oder von den Messwerten abgeleitete Werte werden an die Datenverarbeitungs-Cloud 9 übertragen. Diese führt dann mit Hilfe einer geeigneten Software die Untersuchung der Messwerte durch, mit anderen Worten wird eine Fouriertransformation durchgeführt und das so erhaltene Spektrum auf das Vorliegen unsymmetrischer Schwingungen untersucht. Das Analyseverfahren ist weiter oben genauer beschrieben.

## Patentansprüche

1. Verfahren zum Feststellen unsymmetrischer Schwingungen eines Transformators oder einer Drossel (1) beim Betrieb des Transformators oder der Drossel (1) angeschlossen an ein Hochspannungsnetz, bei dem
- Vibrationen, die beim Betreiben des Transformators oder der Drossel (1) entstehen, mittels mehrerer an unterschiedlichen Stellen (A, B, C, D) des Transformators oder der Drossel (1) angeordneter Schwingungsaufnehmer (8) erfasst werden, die ausgangsseitig Messwerte bereitstellen,
- die Messwerte und/oder die von den Messwerten abgeleiteten Werte über eine Nahbereichs-Kommunikationsverbindung (11) an eine Kommunikationseinheit (12) übertragen werden,
- die Messwerte und/oder die von den Messwerten abgeleiteten Werte über eine Fernbereichs-Kommunikationsverbindung (13) von der Kommunikationseinheit (12) an eine Datenverarbeitungs-Cloud (9) übertragen werden,
- die Messwerte und/oder die von den Messwerten abgeleiteten Werte von der Datenverarbeitungs-Cloud (9) mittels einer Fouriertransformation unter Gewinnung eines Frequenzspektrums in ihre Frequenzanteile zerlegt werden,
- in Abhängigkeit einer Grundfrequenz des Hochspannungsversorgungsnetzes gerade und ungerade Frequenzanteile des Frequenzspektrums ermittelt und in ein Verhältnis R zueinander gesetzt werden,
- auf das Vorliegen unsymmetrischer Schwingungen geschlossen wird, wenn das Verhältnis R einen vorbestimmten Schwellenwert überschreitet.

2. Verfahren nach Anspruch 1,
**dadurch gekennzeichnet, dass**
jede Kommunikationseinheit (12) eine Speichereinheit aufweist, auf der Messwerte und/oder aus den Messwerten abgeleitete Werte gespeichert werden.

3. Verfahren nach Anspruch 2,
**dadurch gekennzeichnet, dass**
mittels einer Antenne zur Positionsbestimmung, die in einer Kommunikationseinheit (12) angeordnet ist, die geographische Lage der jeweiligen Kommunikationseinheit (12) und des damit verbundenen Transformators oder der Drossel (1) ermittelt und an die Datenverarbeitungs-Cloud (9) übertragen wird.

4. Verfahren nach einem der Ansprüche 2 oder 3,
**dadurch gekennzeichnet, dass**
die Kommunikationseinheit ein Mobiltelefon (8, 12) ist.

5. Verfahren nach einem der vorhergehenden Ansprüche,
**dadurch gekennzeichnet, dass**
die Vibrationen über eine vorgegebene Zeitdauer hinweg erfasst werden.

6. Computerprogramm für ein Rechengerät,
**dadurch gekennzeichnet, dass**
es zur Ausführung des Verfahrens nach einem der Ansprüche 1 bis 5 geeignet ist.

7. Speichermedium,
**dadurch gekennzeichnet, dass**
auf ihm ein Computerprogramm nach dem Anspruch 6 gespeichert ist.

## Claims

1. A method for detecting asymmetrical vibrations of a transformer or a choke (1) during operation of the transformer or the choke (1) connected to a high voltage grid, in which
- vibrations arising when operating the transformer or the choke (1) are measured by means of multiple vibration sensors (8) that are arranged at different points (A, B, C, D) of the transformer or the choke (1), which provide measurement values on the output side,
- the measurement values and/or the values derived from the measurement values are transmitted, via a short-range communication link (11), to a communication unit (12),
- the measurement values and/or the values derived from the measurement values are transmitted, via a long-range communication link (13), by the communication unit (12) to a data processing cloud (9),
- the measurement values and/or the values derived from the measurement values are split into their frequency parts by the data processing cloud (9) by means of a Fourier transformation, obtaining a frequency spectrum,
- depending on a fundamental frequency of the high-voltage supply grid, even and odd frequency parts of the frequency spectrum are determined and put into a ratio R to one another,
- the presence of asymmetrical vibrations is inferred if the ratio R exceeds a predetermined threshold value.

2. The method according to claim 1,
**characterised in that**
each communication unit (12) has a memory unit on which measurement values and/or values derived from the measurement values are stored.

3. The method according to claim 2,
**characterised in that**
by means of an antenna for position determination, arranged in a communication unit (12), the geographical position of the respective communication unit (12) and of the transformer or choke (1) connected to it is determined and transmitted to the data processing cloud (9).

4. The method according to any one of claims 2 or 3,
**characterised in that**
the communication unit is a mobile phone (8, 12).

5. The method according to any one of the preceding claims,
**characterised in that**
the vibrations are measured over a preset period of time.

6. A computer program for a computing device,
**characterised in that**
it is suitable for carrying out the method according to any one of claims 1 to 5.

7. A storage medium,
**characterised in that**
a computer program according to claim 6 is stored thereon.

## Revendications

1. Procédé de détermination de vibrations asymétriques d'un transformateur ou d'une bobine d'inductance (1) lors du fonctionnement du transformateur ou de la bobine d'inductance (1) raccordé à un réseau haute tension, dans lequel
- des vibrations, générées lors du fonctionnement du transformateur ou de la bobine d'inductance (1), sont détectées au moyen de plusieurs capteurs de vibrations (8) disposés en différents points (A, B, C, D) du transformateur ou de la bobine d'inductance (1), lesquels fournissent des valeurs de mesure en sortie,
- les valeurs de mesure et/ou les valeurs dérivées des valeurs de mesure sont transmises via une liaison de communication à courte portée (11) à une unité de communication (12),
- les valeurs de mesure et/ou les valeurs dérivées des valeurs de mesure sont transmises via une liaison de communication
à longue portée (13) de l'unité de communication (12) à un cloud de traitement de données (9),
- les valeurs de mesure et/ou les valeurs dérivées des valeurs de mesure sont, par le cloud de traitement de données (9), au moyen d'une transformation de Fourier, décomposées en leurs composantes fréquentielles pour obtenir un spectre de fréquences,
- en fonction d'une fréquence fondamentale du réseau d'alimentation haute tension, des composantes fréquentielles paires et impaires du spectre de fréquences sont déterminées et mises en rapport R les unes avec les autres,
- la présence de vibrations asymétriques est déduite si le rapport R dépasse une valeur seuil prédéterminée.

2. Procédé selon la revendication 1,
**caractérisé en ce que**
chaque unité de communication (12) comporte une unité de mémoire sur laquelle sont stockées les valeurs de mesure et/ou les valeurs dérivées des valeurs de mesure,

3. Procédé selon la revendication 2,
**caractérisé en ce que**
au moyen d'une antenne de positionnement, disposée dans une unité de communication (12), la position géographique de l'unité de communication (12) respective et du transformateur ou de la bobine d'inductance (1) qui y est connecté est déterminée et transmise au cloud de traitement de données (9).

4. Procédé selon l'une quelconque des revendications 2 à 3,
**caractérisé en ce que**
l'unité de communication est un téléphone mobile (8, 12).

5. Procédé selon l'une quelconque des revendications précédentes,
**caractérisé en ce que**
les vibrations sont détectées sur une durée prédéterminée.

6. Programme informatique pour un appareil de traitement de données,
**caractérisé en ce qu'**il
est adapté pour exécuter le procédé selon l'une des revendications 1 à 5.

7. Support de stockage,
**caractérisé en ce qu'**un
programme informatique selon la revendication 6 est stocké sur celui-ci.
